# EUROPÄISCHE PATENTANMELDUNG

(11) **EP 1 908 987 A2**
(43) Veröffentlichungstag der Anmeldung: **09.04.2008**
(21) Anmeldenummer: 07019119.2
(22) Anmeldetag: 28.09.2007
(51) Int. Cl.: F16F 13/14

(54) **Elastische Lagerbuchse mit hydraulischer Dämpfung**

(30) Priorität: 07.10.2006 DE 102006047445
(71) Anmelder: Jörn GmbH, 71336 Waiblingen (DE)
(72) Erfinder: Seck, Gerhard, 73630 Remshalden (DE); Zawadzki, Bernd, 71409 Schwaikheim (DE); Sprang, Rüdiger, 53125 Bonn (DE)
(74) Vertreter: Liebl, Thomas

(57) **Zusammenfassung**

Die Erfindung betrifft eine elastische Lagerbuchse mit hydraulischer Dämpfung mit einem Innenteil (2) zur Verbindung mit einem ersten zu lagernden Bauteil und einem Außenrohr (3), mit einem Elastomerkörper (4) zwischen dem Innenteil (2) und dem Außenrohr (3), mit zwei, radial gegenüberliegenden, mit hydraulischer Flüssigkeit gefüllten und durch einen Strömungskanal (10a, 10b) verbundene Arbeitskammern (5, 6), die durch zugeordnete Aussparungen im Außenrohr (3) und im Elastomerkörper (4) sowie durch eine flüssigkeitsdicht abschließende Außenhülse (7) gebildet sind. Erfindungsgemäß ist das Außenrohr (3) als einteiliges Käfigteil ausgebildet, mit jeweils einem stirnseitig umlaufend geschlossenen Stützringteil (22a, 22b) und mit zwei radial gegenüberliegenden, die Stützringteile (22a, 22b) axial verbindenden Rohrstegteilen (23a, 23b). In den Rohrstegteilen (23a, 23b) ist jeweils ein Fenster (26a, 26b) angebracht, dem ein Druckelement (27a, 27b; 31) zugeordnet ist, welches im Fensterbereich angeordnet ist und vor der Montage der Außenhülse (7) radial weiter als der Innendurchmesser der Außenhülse (7) vorsteht, so dass beim Aufstecken der Außenhülse (7) das wenigstens eine Druckelement (27a, 27b; 31) nach radial innen unter Aufbringung einer Vorspannung im Elastomerkörper (4; 24a, 24b) verlagert wird.

## Beschreibung

Die Erfindung betrifft eine elastische Lagerbuchse mit hydraulischer Dämpfung, insbesondere für Lagerungen in einem Kraftfahrzeug oder als Maschinenlagerung nach dem Oberbegriff des Anspruchs 1.

Eine bekannte, gattungsgemäße elastische Lagerbuchse mit hydraulischer Dämpfung (DE 36 17 787 C2) besteht aus einem Innenteil zur Verbindung mit einem ersten zu lagernden Bauteil und einem Außenrohr sowie aus einem Elastomerkörper zwischen dem Innenteil und dem Außenrohr. Zudem weisen solche Lagerbuchsen zwei radial gegenüberliegende, mit hydraulischer Flüssigkeit gefüllte Arbeitskammern auf, die durch zugeordnete Aussparungen im Außenrohr und im Elastomerkörper sowie durch eine flüssigkeitsdicht abschließende Außenhülse gebildet sind. Die zwei Arbeitskammern sind durch einen Strömungskanal miteinander verbunden.

Bei einer solchen elastischen Lagerbuchse mit hydraulischer Dämpfung wird bei oszilierender Ein- und Ausfederung eine Änderung des Volumens mit einer Änderung des Drucks in den Arbeitskammern erzeugt, die von der Einfederung und der Beulfähigkeit oder sog. Volumensteifigkeit der Kammerbegrenzungen abhängig ist. Durch eine solche Volumenänderung wird Flüssigkeit von der einen Arbeitskammer durch den Strömungskanal in die andere Arbeitskammer und zurück verdrängt. Das gewünschte Dämpfungsverhalten ergibt sich durch die Eigenschwingung (Tilgung) der Flüssigkeitsmasse im Strömungskanal.

Bei der Einleitung von oszilierenden Kräften durch die zu lagernden Komponenten auf das Innenteil, erfährt der Elastomerkörper eine statische und dynamische Verformung in Verbindung mit einer wechselweisen Druck- und Zugbeanspruchung. Da der Elastomerkörper vorzugsweise durch Anvulkanisieren mit dem Innenteil und dem Außenrohr fest verbunden ist, können Zugbelastungen die Lagerfunktion beeinträchtigen und durch Beschädigungen zum Ausfall des Lagers führen. Es ist bereits allgemein bekannt, zur Kompensation solcher Zugspannungen einen Elastomerkörper in einem Lager mit einer Vorspannung zu versehen:

Dazu ist es bekannt, eine Lagerbuchse bestehend aus einem Innenteil, einem Außenrohr, einem dazwischenliegenden Elastomerkörper und einer Außenhülse zunächst mit einem elliptischen Querschnitt herzustellen. In einem zusätzlichen weiteren Arbeitsschritt wird in einer Vorrichtung mittels Kalibrierung eine Umformung in einen kreisrunden Durchmesser in Verbindung mit einer Reduzierung des Außendurchmessers durchgeführt (DE 199 37 714 A1). Diese Maßnahme erfordert den aufwendigen zusätzlichen Arbeitsschritt der Kalibrierung.

Weiter ist eine elastische Lagerbuchse mit hydraulischer Dämpfung bekannt (DE 103 51 229 A1), bei der das Außenrohr aus einzelnen Teilstücken, nämlich zwei jeweils stirnseitigen Stützringteilen und einem separaten Mittelteil gebildet ist, welches beim Aufbringen der Außenhülse radial nach innen verspannt wird. Bei dieser Verformung sind die stirnseitigen Stützringteile jeweils durch einen Spalt zum separaten Mittelteil entkoppelt und werden in gewünschter Weise nicht unkontrolliert mit verformt, so dass die dortigen Dichtflächen und Dichtlippen zur Außenhülse hin nicht ungünstig beeinflusst werden. Diese Aufteilung des Außenrohrs in mehrere separate Rohrteile führt aber zu einem erhöhten Aufwand bei der Vulkanisation, da diese separaten Teile einzeln in die Vulkanisierform eingebracht und dort lagerichtig gehalten werden müssen.

Aufgabe der Erfindung ist es, eine gattungsgemäße elastische Lagerbuchse mit hydraulischer Dämpfung so weiterzubilden, dass sie bei einfachem Aufbau und guter Funktion mit einer Vorspannung im Elastomerkörper kostengünstig herstellbar ist.

Diese Aufgabe wird mit den Merkmalen des Anspruchs 1 gelöst.

Gemäß Anspruch 1 ist am Außenrohr zumindest in Teilbereichen radial außen eine Elastomerschicht aufgebracht und in einem oder beiden axial seitlichen Bereichen wenigstens ein Strömungskanal mit seinem Kanalboden und den Kanalseitenwänden eingeformt, wobei der Strömungskanal radial außen von der Außenhülse flüssigkeitsdicht begrenzt ist.

Das Außenrohr ist als einteiliges Käfigteil ausgebildet, mit jeweils einem stirnseitig umlaufend geschlossenen und mit Dichtlippen die Außenhülse abstützenden Stützringteil und mit zwei radial gegenüberliegenden die Stützringteile axial verbindenden Rohrstegteilen. Zwischen den Rohrstegteilen sind Aussparungen für die Arbeitskammern gebildet, wobei die Rohrstegteile dem Elastomerkörper zugeordnet sind, der in diesen Bereichen keine Ausnehmungen aufweist.

In den Rohrstegteilen ist jeweils wenigstens ein Fenster angebracht, dem wenigstens ein Druckelement zugeordnet ist, welches im Fensterbereich angeordnet ist und vor der Montage der Außenhülse radial weiter als der Innendurchmesser der Außenhülse vorsteht. Beim Aufstecken der Außenhülse wird dann das wenigstens eine Druckelement nach radial innen unter Aufbringung einer Vorspannung im Elastomerkörper verlagert, wobei diese Verlagerung weitgehend von den Stützringteilen und/oder Rohrstegteilen entkoppelt ist, so dass diese vorteilhaft nicht unzulässig mitverformt werden.

Das Außenrohr als einteiliges Käfigteil kann einfach bei der Herstellung in einer Vulkanisierform eingebracht und gehalten werden, so dass eine kostengünstige Herstellung möglich ist.

Bei einer ersten Ausführungsform nach Anspruch 2 besteht ein Druckelement lediglich aus einer radialen, durch das Fenster hindurch gehenden Auswölbung von Elastomermaterial des Elastomerkörpers, das beim Aufstecken der Außenhülse unter Aufbringung einer Vorspannung nach radial innen durch das Fenster verdrängt wird.

In einer weiteren Ausführungsform nach Anspruch 2 ist ein Druckelement als im Fensterbereich im Elastomermaterial eingeformtes oder eingelegtes Druckstück ausgebildet. Ein solches Druckstück kann aus relativ stabilem Material, z. B. aus Metall oder Hartkunststoff bestehen und eine gewölbte Außenfläche aufweisen. Beim Aufstecken der Außenhülse wird dann das Druckstück durch das Fenster hindurch nach radial innen unter Aufbringung einer Vorspannung im radial darunter liegenden Elastomerkörperbereich verlagert.

In einer bevorzugten Ausführungsform nach Anspruch 4 ist ein Druckelement in der Art eines Fensterdeckels unter Verwendung des Rohrsteg-Fensterabschnitts gebildet, der vorzugsweise im Elastomerbereich eingeformt ist und vor dem Aufstecken der Außenhülse durch eine radial nach außen weisende Biegung und/oder aufgebrachtes Elastomermaterial eine gegenüber dem Innendurchmesser der Außenhülse radiale Auswölbung aufweist. Beim Aufstecken der Außenhülse wird dann diese radiale Auswölbung in Verbindung mit einer Verlagerung des Fensterdeckels und unter Aufbringung der gewünschten Vorspannung nach radial innen verlagert.

In einer besonders bevorzugten Weiterbildung der vorstehenden Ausführungsform ist gemäß Anspruch 5 der Rohrsteg-Fensterabschnitt als Fensterdeckel zumindest einseitig, vorzugsweise beidseitig gegenüberliegend über ein Filmscharnier mit dem angrenzenden Fensterbereich verbunden, wobei vorzugsweise das Filmscharnier nach Anspruch 6 in der Form einer oder mehrerer Sicken ausgebildet ist. Dabei hängt der radial verlagerbare Fensterdeckel einteilig mit dem übrigen Außenrohr zusammen, so dass dieses vorteilhaft als einteiliges Käfigteil in eine Vulkanisierform eingelegt werden kann.

Ein gutes Dämpfungsverhalten wird erreicht, wenn die schwingende Flüssigkeitsmasse im Strömungskanal möglichst groß ist, was durch einen möglichst langen Strömungskanal zu erreichen ist. Dies ist in Verbindung mit den vorstehenden möglichen Lagerausführungen dergestalt nach Anspruch 7 zu erzielen, dass der Strömungskanal aus zwei Teilkanälen besteht, von denen jeweils ein Teilkanal seitlich neben den Arbeitskammern in einer Querebene verläuft, wobei der erste Teilkanal mit der ersten Arbeitskammer über eine erste seitliche Kammerausgangsöffnung verbunden ist, neben der ersten Arbeitskammer und der zweiten Arbeitskammer in Umfangsrichtung vorbeiläuft und in eine Übergangskonturkammer einmündet. Der zweite Teilkanal ist entsprechend mit der zweiten Arbeitskammer über eine zweite seitliche Kammerausgangsöffnung verbunden, läuft neben der zweiten Arbeitskammer und der ersten Arbeitskammer in der entgegengesetzten Umfangsrichtung vorbei und mündet ebenfalls in die Übergangskonturkammer, durch die in Lagerlängsrichtung eine Strömungsverbindung zwischen dem ersten Teilkanal und dem zweiten Teilkanal hergestellt ist.

Vorteilhaft ist dabei die Übergangskonturkammer als Zylinderabschnitt ausgebildet und weist einen größeren Querschnitt als die Teilkanäle auf. Zudem sind in der Übergangskonturkammer Strömungsführungskonturen zwischen den einmündenden Teilkanälen vorgesehen.

Bei einem bevorzugten Einbau der Lagerbuchse nach Anspruch 9, beispielsweise als Fahrerhauslager, wird die Lagerbuchse in ein Aufnahmeauge des zweiten zu lagernden Bauteils, beispielsweise eines Fahrerhauses eines LKW, mit etwa horizontaler Buchsenachse und vertikal übereinander liegenden Arbeitskammern eingepresst. Eine so eingebaute Lagerbuchse ist dann für eine gedämpfte elastische Abstützung vertikaler Belastungen geeignet.

In einer weiteren Ausgestaltung nach Anspruch 10 sind am Innenteil mit Elastomermaterial überzogene Anschläge angeformt, die radial in die Arbeitskammern unter Berücksichtigung eines freien Federwegs einragen. Bei starken Ein- oder Ausfederungen kommen diese Anschläge an der Innenseite der Außenhülse zur Anlage und stützen sich darüber im Aufnahmeauge ab. Zudem ist für eine gute Tragfunktion das Innenteil im Querschnitt nach unten konisch verjüngt ausgebildet, wobei das Innenteil aus Kunststoff mit einer zentralen Bohrung zur Aufnahme einer Schwenkachse hergestellt ist. Ein solches Lager ist unter anderem gut geeignet zur Abstützung des Fahrerhauses eines LKW.

Anhand einer Zeichnung wird die Erfindung näher erläutert.

Es zeigen:
- Fig. 1: einen Querschnitt durch eine elastische Lagerbuchse mit hydraulischer Dämpfung entlang der Linie A-A aus Fig. 2,
- Fig. 2: einen Längsschnitt durch die Lagerbuchse,
- Fig. 3: eine perspektivische Ansicht der Lagerbuchse,
- Fig. 4: eine perspektivische Ansicht eines Außenrohrs als einteiliges Käfigteil,
- Fig. 5: einen Längsschnitt durch die Lagerbuchse entlang der Linie C-C aus Fig. 1, und
- Fig. 6 bis 9: unterschiedliche Ausführungsformen von Druckelementen.

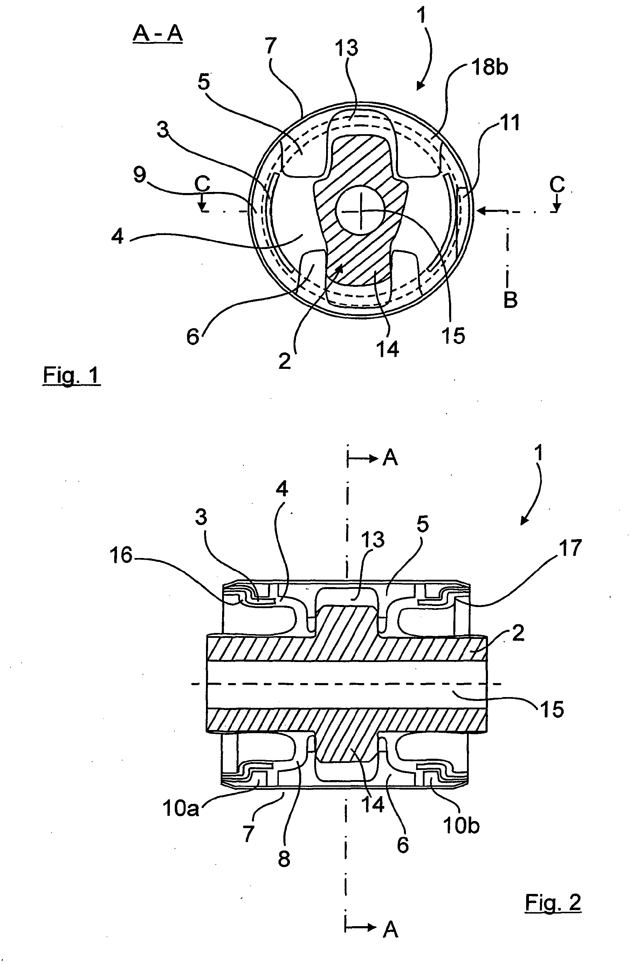

In den Fig. 1 bis 3 und 5 ist jeweils eine elastische Lagerbuchse 1 dargestellt, die aus einem Innenteil 2, einem Außenrohr 3 und einem Elastomerkörper 4 zwischen dem Innenteil 2 und dem Außenrohr 3 besteht.

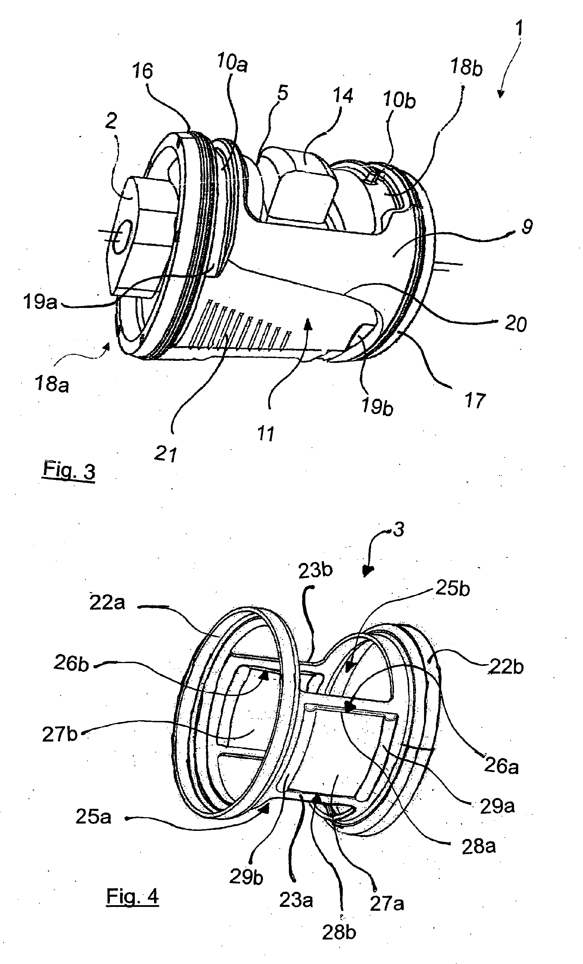

Zudem sind zwei radial gegenüberliegende, mit hydraulischer Flüssigkeit gefüllte Arbeitskammern ausgebildet (obere Arbeitskammer 5 und untere Arbeitskammer 6), die durch zugeordnete Aussparungen im Außenrohr 3 sowie im Elastomerkörper 4 und durch eine flüssigkeitsdicht abschließende Außenhülse 7 hergestellt sind. Wie aus den Fig. 1 und 2 ersichtlich, sind damit die Arbeitskammern 5, 6 bezüglich des Elastomermaterials an den jeweiligen Kammerböden von den beidseitigen stark dimensionierten Elastomerblöcken 24a, 24b und in den Seitenbereichen von zur Lagermitte eingezogenen dünnwandigeren Elastomerwänden 8 begrenzt. Bedingt durch die Ausnehmungen am Außenrohr 3 im Bereich der Arbeitskammern 5, 6 sind in Fig. 1 lediglich die gegenüberliegenden Rohrstegteile 23a, 23b des Außenrohrs 3 und entsprechen in Fig. 2 nur die eingeformten umlaufenden Stützringteile 22a, 22b des Außenrohrs 3 sichtbar, die näher in Verbindung mit Fig. 4 beschrieben werden.

Auf dem Außenrohr 3 ist radial außen eine Elastomerschicht 9 aufgebracht, in der ein Strömungskanal 10 mit seinen beiden Teilkanälen 10a, 10b sowie eine Übergangskonturkammer 11 eingeformt sind, wobei die Teilkanäle 10a, 10b und die Übergangskonturkammer 11 radial außen von der Außenhülse 7 flüssigkeitsdicht begrenzt sind.

Am Innenteil 2 sind in einem axial mittleren Bereich gegenüberliegende, mit Elastomermaterial 13 überzogene Anschläge 14 angeformt, die jeweils radial in die Arbeitskammern 5, 6 einragen. Das Innenteil 2 ist im Querschnitt nach unten konisch verjüngt ausgebildet. Es ist aus Kunststoff hergestellt mit einer zentralen Bohrung 15 zur Aufnahme einer metallischen Schwenkachse.

In Fig. 3 ist eine perspektivische Ansicht der elastischen Lagerbuchse 1, jedoch ohne die Außenhülse 7 gezeigt. Es sind hier deutlich das Innenteil 2, die obere Arbeitskammer 5 mit dem oberen Anschlag 14, sowie die stirnseitig umlaufenden Ringbereiche 16 und 17 mit den aus Elastomermaterial geformten Dichtlippen für die Außenhülse 7 erkennbar. Zudem ist die Elastomerschicht 9 zu ersehen, in die die Teilkanäle 10a, 10b und die Übergangskonturkammer 11 eingeformt sind.

Die Teilkanäle 10a und 10b verlaufen jeweils seitlich neben den Arbeitskammern 5 und 6. Dabei ist der Teilkanal 10b mit der oberen Arbeitskammer 5 über eine seitliche Kammerausgangsöffnung 18b verbunden. Von dort läuft der Teilkanal 10b an der oberen Arbeitskammer 5 und der unteren Arbeitskammer 6 in Umfangsrichtung vorbei und mündet an der Einmündung 19b in die Übergangskonturkammer 11.

Entsprechend beginnt der andere Teilkanal 10a an einer (in Fig. 3 nicht zu ersehenden) Kammerausgangsöffnung 18a der unteren Arbeitskammer 6 und verläuft neben der unteren Arbeitskammer 6 und der oberen Arbeitskammer 5 in der entgegengesetzten Umfangsrichtung bis zur Einmündung 19a in die Überganskonturkammer 11. In der Übergangskonturkammer 11 ist die Strömungsverbindung zwischen den Teilkanälen 10a, 10b bzw. deren Einmündungen 19a, 19b hergestellt.

Die Übergangskonturkammer 11 ist teilweise als Zylinderabschnitt ausgebildet mit einer vertikalstehenden Abschnittsfläche. Die obere Begrenzung 20 der Stromführungskontur hat einen strömungsoptimierten Kurvenverlauf zwischen den Einmündungen 19a und 19b, wobei zusätzlich im unteren Bereich der Übergangskonturkammer 11 unterhalb und seitlich zur Einmündung 19a vertikal ausgerichtete Längslamellen 21 angeformt, deren obere Verbindungslinie einer unteren Begrenzung der Stromführungskontur etwa parallel mitlaufend mit der oberen Begrenzung 20 entspricht.

In Fig. 4 ist das Außenrohr 3 als einteiliges Käfigteil, vorzugsweise aus Metall, gezeigt mit stirnseitig umlaufend geschlossenen Stützringteilen 22a, 22b und mit zwei radial gegenüberliegenden die Stützringteile 22a und 22b axial verbindenden Rohrstegteilen 23a, 23b. Die Stützringteile sind radial außen bei der fertig hergestellten Lagerbuchse zur Ausbildung der stirnseitigen Ringbereiche 16, 17 und der Dichtlippen mit Elastomermaterial überzogen. Die Rohrstegteile 23a, 23b sind den beiden gegenüberliegenden Elastomerblöcken 24a, 24b des Elastomerkörpers 4 zugeordnet und dort eingeformt. Zwischen den Rohrstegteilen sind die Aussparungen 25a, 25b für die Arbeitskammern 5, 6 ausgespart.

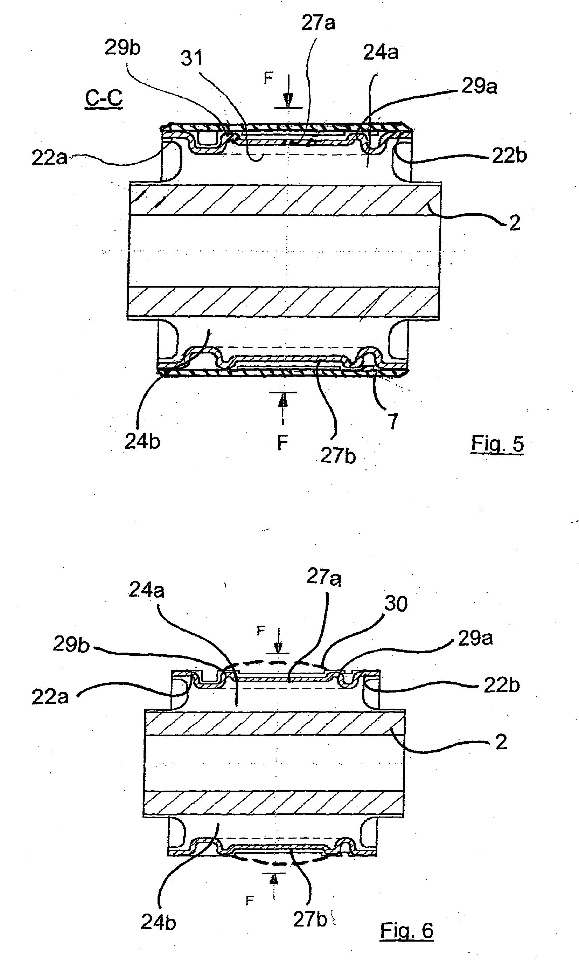

In den Rohrstegteilen 23a, 23b sind jeweils Fenster 26a, 26b angebracht, welche bei den Ausführungsformen der Figuren 5 bis 8 mit Druckelementen in der Art von Fensterdeckeln 27a, 27b abgedeckt sind. Diese Fensterdeckel 27a, 27b sind materialeinheitlich mit den Rohrstegteilen 23a, 23b aus den Rohrsteg-Fensterabschnitten gebildet, die hier jeweils mit in Axialrichtung freigeschnittenen Spalten 28a, 28b freigelegt und jeweils axial gegenüberliegend durch scharnierartig wirkende Sicken 29a, 29b mit dem angrenzenden Fensterbereich verbunden sind. Die Lage der Spalte und Freischnitte könnte vertauscht sein. Auch eine nur einseitige Scharnierverbindung wäre mit etwa gleicher Funktion möglich.

In Fig. 5 ist ein Längsschnitt einer ersten Ausführungsform entlang der Linie C-C aus Fig. 1 gezeichnet, so dass hier eine Draufsicht auf die geschnittenen, bereits unter Vorspannung stehenden Elastomerblöcke 24a, 24b mit bereits aufgesteckter und aufgepresster Außenhülse 7 gezeigt ist. In Fig. 6 ist dazu für die erste Ausführungsform strichliert die radiale Auswölbung 30 vor dem Aufstecken der Außenhülse 7 dargestellt, die durch eine entsprechende nach radial außen weisende Biegung der Fensterdeckel und/oder durch aufgebrachtes Elastomer gebildet sein kann. Beim Aufstecken der Außenhülse wird dann diese radiale Auswölbung 30 nach radial innen verdrängt, wie in Fig. 5 dargestellt, wodurch in den Elastomerblöcken 24a, 24b eine Vorspannung aufgebracht wird. Das dabei radial nach innen verdrängte Elastomermaterial ist jeweils durch die strichlierten Linien 31 und die beim Aufstecken der Außenhülse nach radial innen wirkende Kraft durch die Pfeile F angedeutet.

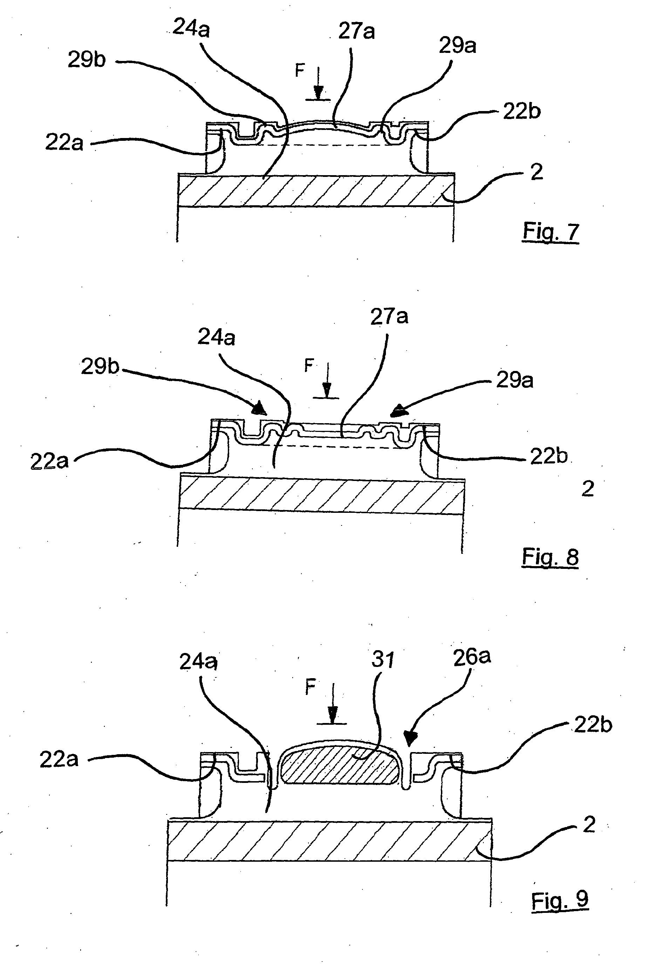

In den Fig. 7 und 8 ist jeweils bereits der vorgespannte Zustand gezeichnet, dazu wobei die bereits aufgesteckte Außenhülse 7 nicht dargestellt ist. Zu der zweiten modifizierten Ausführungsform nach Fig. 7 weist der Fensterdeckel 27a eine auch im vorgespannten Zustand bleibende Biegung nach außen auf. In der dritten modifizierten Ausführungsform nach Fig. 8 sind für eine noch bessere Kraftentkopplung zu den Stützringteilen 22a, 22b hin die Sicken 29a, 29b als Doppelsicken ausgebildet.

In der vierten Ausführungsform nach Fig. 9 ist das Fenster 26a insgesamt ausgeschnitten und in diesen Bereich ein im Elastomermaterial eingeformtes Druckstück 31 angeordnet. Das Druckstück 31 ragt mit einer Auswölbung radial über den Innendurchmesser der Außenhülse hinaus und wird beim Aufstecken der Außenhülse nach radial innen unter Aufbringung einer Vorspannung im Elastomerblock 24a verlagert.

## Patentansprüche

1. Elastische Lagerbuchse mit hydraulischer Dämpfung
mit einem Innenteil (2) zur Verbindung mit einem ersten zu lagernden Bauteil und einem Außenrohr (3),
mit einem Elastomerkörper (4) zwischen dem Innenteil (2) und dem Außenrohr (3),
mit zwei, radial gegenüberliegenden, mit hydraulischer Flüssigkeit gefüllten Arbeitskammern (5, 6), die durch zugeordnete Aussparungen im Außenrohr (3) und im Elastomerkörper (4) sowie durch eine flüssigkeitsdicht abschließende Außenhülse (7) gebildet sind, und
mit wenigstens einem Strömungskanal (10a, 10b) zur Strömungsverbindung der zwei Arbeitskammern (5, 6),
**dadurch gekennzeichnet,**
**dass** am Außenrohr (3) zumindest in Teilbereichen radial außen eine Elastomerschicht (9) aufgebracht ist, und in einem oder beiden axial seitlichen Bereichen wenigstens ein Strömungskanal (10a, 10b) mit seinem Kanalboden und den Kanalseitenwänden eingeformt ist, wobei der Strömungskanal (10a, 10b) radial außen von der Außenhülse (7) flüssigkeitsdicht begrenzt ist,
**dass** das Außenrohr (3) als einteiliges Käfigteil ausgebildet ist, mit jeweils einem stirnseitig umlaufend geschlossenen Stützringteil (22a, 22b) und mit zwei radial gegenüberliegenden, die Stützringteile (22a, 22b) axial verbindenden Rohrstegteilen (23a, 23b), wobei zwischen den Rohrstegteilen (23a, 23b) die Aussparungen (25a, 25b) für die Arbeitskammern (5, 6) gebildet sind und die Rohrstegteile (23a, 23b) dem Elastomerkörper (4; 24a, 24b) zugeordnet sind, und
**dass** in den Rohrstegteilen (23a, 23b) jeweils wenigstens ein Fenster (26a, 26b) angebracht ist, dem wenigstens ein Druckelement (27a, 27b; 31) zugeordnet ist, welches im Fensterbereich angeordnet ist und vor der Montage der Außenhülse (7) radial weiter als der Innendurchmesser der Außenhülse (7) vorsteht, so dass beim Aufstecken der Außenhülse (7) das wenigstens eine Druckelement (27a, 27b; 31) nach radial innen unter Aufbringung einer Vorspannung im Elastomerkörper (4; 24a, 24b) verlagert wird, ohne dabei die Stützringteile (22a, 22b) und/oder Rohrstegteile (23a, 23b) unzulässig zu verformen.

2. Elastische Lagerbuchse nach Anspruch 1, **dadurch gekennzeichnet, dass** ein Druckelement aus einer radialen, durch das Fenster (26a, 26b) hindurchgehenden Auswölbung von Elastomermaterial des Elastomerkörpers (4) besteht, das beim Aufstecken der Außenhülse (7) unter Aufbringung einer Vorspannung nach radial innen verdrängt wird.

3. Elastische Lagerbuchse nach Anspruch 1, **dadurch gekennzeichnet, dass** ein Druckelement als im Fensterbereich im Elastomermaterial eingeformtes oder eingelegtes Druckstück (31) ausgebildet ist, das beim Aufstecken der Außenhülse (7) unter Aufbringung einer Vorspannung durch das Fenster (26a, 26b) nach radial innen verlagert wird.

4. Elastische Lagerbuchse nach Anspruch 1, **dadurch gekennzeichnet, dass** ein Druckelement in der Art eines Fensterdeckels (27a, 27b) unter Verwendung des Rohrsteg-Fensterabschnitts gebildet ist, der vorzugsweise im Elastomermaterial eingeformt ist und vor dem Aufstecken der Außenhülse (7) durch eine nach radial außen weisende Biegung und/oder aufgebrachtes Elastomermaterial eine gegenüber dem Innendurchmesser der Außenhülse (7) radiale Auswölbung (30) aufweist.

5. Elastische Lagerbuchse nach Anspruch 4, **dadurch gekennzeichnet, dass** der Rohrsteg-Fensterabschnitt als Fensterdeckel (27a, 27b) zumindest einseitig, vorzugsweise beidseitig gegenüberliegend über ein Filmscharnier (29a, 29b) mit dem angrenzenden Fensterbereich verbunden ist.

6. Elastische Lagerbuchse nach Anspruch 5, **dadurch gekennzeichnet, dass** das Filmscharnier als Sicke (29a, 29b) ausgebildet ist.

7. Elastische Lagerbuchse nach einem der Ansprüche 1 bis 6, **dadurch gekennzeichnet, dass** der Strömungskanal aus zwei Teilkanälen (10a, 10b) besteht, von denen jeweils ein Teilkanal (10a, 10b) seitlich neben den Arbeitskammern (5, 6) in einer Querebene verläuft, dergestalt
dass der erste Teilkanal (10b) mit der ersten Arbeitskammer (5) über eine erste seitliche Kammerausgangsöffnung (18b) verbunden ist, neben der ersten Arbeitskammer (5) und der zweiten Arbeitskammer (6) in Umfangsrichtung vorbeiläuft und in eine Übergangskonturkammer (11) einmündet, und
dass der zweite Teilkanal (10a) entsprechend mit der zweiten Arbeitskammer (6) über eine zweite seitliche Kammerausgangsöffnung (19a) verbunden ist, neben der zweiten Arbeitskammer (6) und der ersten Arbeitskammer (5) in der entgegengesetzten Umfangsrichtung vorbeiläuft und ebenfalls in die Übergangskonturkammer (11) einmündet, über die in Buchsenlängsrichtung eine Strömungsverbindung zwischen dem ersten Teilkanal (10b) und dem zweiten Teilkanal (10a) hergestellt ist.

8. Elastische Lagerbuchse nach Anspruch 7, **dadurch gekennzeichnet, dass** die Übergangskonturkammer (11) als Zylinderabschnitt ausgebildet ist und dabei einen größeren Querschnitt als die Teilkanäle (10a, 10b) aufweist, und
dass die Übergangskonturkammer (11) eine Strömungsführungskontur (20; 21; 22) zwischen den einmündenden Teilkanälen (10a, 10b) aufweist.

9. Elastische Lagerbuchse nach einem der Ansprüche 1 bis 3, **dadurch gekennzeichnet, dass** der Einbau der Lagerbuchse (1) durch Einpressen in ein Aufnahmeauge des zweiten zu lagernden Bauteils mit etwa horizontaler Buchsenachse und vertikal übereinanderliegenden Arbeitskammern (5, 6) erfolgt.

10. Elastische Lagerbuchse nach einem der Ansprüche 1 bis 9, **dadurch gekennzeichnet, dass** am Innenteil (2) mit Elastomermaterial (13) überzogene Anschläge (14) angeformt sind die radial in die Arbeitskammern (5, 6) einragen,
dass das Innenteil (2) im Querschnitt nach unten konisch verjüngt ausgebildet ist, und
dass das Innenteil (2) aus Kunststoff mit einer zentralen Bohrung (15) zur Aufnahme einer Schwenkachse hergestellt ist.
